(19) **Europäisches Patentamt / European Patent Office / Office européen des brevets**

(11) **EP 4 776 347 A1**

(12) **EUROPEAN PATENT APPLICATION**
published in accordance with Art. 153(4) EPC

(43) Date of publication:
**15.07.2026 Bulletin 2026/29**

(21) Application number: **25869563.4**

(22) Date of filing: **04.11.2025**

(51) International Patent Classification (IPC):
**H01M 4/587** (2010.01)   **H01M 4/38** (2006.01)
**H01M 4/133** (2010.01)   **H01M 10/0525** (2010.01)
**C01B 32/956** (2017.01)   **C01B 32/05** (2017.01)
**C01B 33/02** (2006.01)   **H01M 4/02** (2006.01)

(52) Cooperative Patent Classification (CPC):
**C01B 32/05; C01B 32/956; C01B 33/02;**
**H01M 4/02; H01M 4/133; H01M 4/134; H01M 4/36;**
**H01M 4/38; H01M 4/587; H01M 4/62;**
**H01M 10/0525;** Y02E 60/10

(86) International application number:
**PCT/KR2025/017938**

(87) International publication number:
**WO 2026/095748 (07.05.2026 Gazette 2026/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.11.2024 KR 20240154216**

(71) Applicant: **LG ENERGY SOLUTION, LTD.**
**Seoul 07335 (KR)**

(72) Inventors:
• **KIM, Taeho**
**Daejeon 34122 (KR)**
• **YANG, Hyun Jin**
**Daejeon 34122 (KR)**
• **LEE, Seunggwan**
**Daejeon 34122 (KR)**
• **SHIN, Sun Young**
**Daejeon 34122 (KR)**
• **LEE, Yong Ju**
**Daejeon 34122 (KR)**

(74) Representative: **Hoffmann Eitle**
**Patent- und Rechtsanwälte PartmbB**
**Arabellastraße 30**
**81925 München (DE)**

(54) **NEGATIVE ACTIVE MATERIAL, METHOD FOR PREPARING NEGATIVE ACTIVE MATERIAL, NEGATIVE ELECTRODE COMPOSITION, LITHIUM SECONDARY BATTERY NEGATIVE ELECTRODE COMPRISING SAME, AND LITHIUM SECONDARY BATTERY COMPRISING NEGATIVE ELECTRODE**

(57) The present application relates to a negative electrode active material, a method for manufacturing a negative electrode active material, a negative electrode composition, a negative electrode for a lithium secondary battery including the same, and a lithium secondary battery including a negative electrode.

[Figure 1]

EP 4 776 347 A1

**Description**

## CROSS-REFERENCE TO RELATED APPLICATIONS

This application claims priority to and the benefit of Korean Patent Application No. 10-2024-0154216 filed in the Korean Intellectual Property Office on November 04, 2024, the entire contents of which are incorporated herein by reference.

## TECHNICAL FIELD

The present application relates to a negative electrode active material, a method for manufacturing a negative electrode active material, a negative electrode composition, a negative electrode for a lithium secondary battery including the same, and a lithium secondary battery including a negative electrode.

## BACKGROUND ART

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that uses such electrochemical energy, and the specified range of use thereof tends to be gradually expanding.

Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material capable of intercalation and deintercalation of lithium ions from the positive electrode, and a silicon-based active material with a high discharge capacity can be used as the negative electrode active material.

In particular, due to the demand for high-density energy batteries in recent years, research has actively been conducted on methods to increase a capacity by using together a silicon-based compound, such as Si/C and SiOx, having a capacity 10 times or more than that of a graphite-based material, as a negative electrode active material. However, compared with graphite, which is typically used, a silicon-based compound that is a high-capacity material has an advantage of a greater capacity but undergoes rapid volume expansion during charging, thereby disconnecting a conductive path to degrade battery characteristics.

Accordingly, in order to solve problems occurring when the silicon-based compound is used as the negative electrode active material, methods of suppressing the volume expansion itself, such as a method of adjusting a driving potential, a method of additionally further coating a thin film on an active material layer, and a method of adjusting a particle diameter of a silicon-based compound, or various methods for preventing a conductive path from being disconnected have been discussed. However, such methods may rather deteriorate the performance of a battery, and thus, the application thereof is limited, so that there is still a limitation in commercializing the manufacture of a battery including a negative electrode with a high content of a silicon-based compound.

Among these, research has recently been conducted on silicon-carbon composites among silicon-based active materials in order to secure characteristics such as energy density and rapid charging. However, silicon-carbon composites with high capacity and long life cause problems in slurry processability, and therefore, improving processability is also necessary in the development of high-energy-density lithium secondary batteries.

Therefore, research is needed on a silicon-carbon composite that can improve processability of slurry even when the silicon-carbon composite is used as a negative electrode active material in order to improve capacity, efficiency, and life performance.

Citation List

Patent Literature

(Patent Literature 1) Japanese Patent Application Publication No. 2009-080971

## SUMMARY OF THE INVENTION

It was confirmed through research that, in the manufacturing process of a silicon-carbon composite, when the properties of porous carbon are adjusted and deposition conditions of silicon are changed during the process of depositing $SiH_4$ on the porous carbon, silicon crystallinity of the silicon-carbon composite can be lowered, and defects of the porous carbon being composited can be controlled, and it was found that the silicon-carbon composite accordingly manufactured has excellent capacity, efficiency, and life performance, and the processability of slurry is also improved.

Accordingly, the present application relates to a negative electrode active material, a method for manufacturing a negative electrode active material, a negative electrode composition, a negative electrode for a lithium secondary battery including the same, and a lithium secondary battery including a negative electrode capable of solving the above-described problems.

An exemplary embodiment of the present specification provides a negative electrode active material including a silicon-carbon composite including porous carbon; and silicon deposited on the porous carbon, in which the silicon-carbon composite has a time constant (T1) of 150 to 1000, derived by fitting a graph of etching time (x-axis) vs. C/Si ratio (y-axis) obtained from XPS depth analysis with an exponential decay function.

Another exemplary embodiment provides a method for manufacturing a negative electrode active material including: forming a silicon-carbon composite by depositing silicon on porous carbon, in which in the depositing the silicon on the porous carbon to form a silicon-carbon composite, a deposition temperature is 500°C or higher and 800°C or lower, and a flow rate of silicon is 50 ml/min to 250 ml/min, and the silicon-carbon composite has a time constant (T1) of 150 to 1000, derived by fitting a graph of etching time (x-axis) vs. C/Si ratio (y-axis) obtained from XPS depth analysis with an exponential decay function.

Still another exemplary embodiment provides a negative electrode composition including: the negative electrode active material according to the present application.

Yet another exemplary embodiment provides a negative electrode for a lithium secondary battery including: a negative electrode current collector layer; and a negative electrode active material layer provided on one surface or both surfaces of the negative electrode current collector layer, in which the negative electrode active material layer includes the negative electrode composition according to the present application or a cured product thereof.

Finally, there is provided a lithium secondary battery including a positive electrode; and the negative electrode for a lithium secondary battery according to the present application.

[Advantageous Effects]

A negative electrode active material according to an exemplary embodiment of the present invention includes a silicon-carbon composite, in particular a silicon-carbon composite including silicon deposited on porous carbon. For the silicon-carbon composite, silicon is deposited on porous carbon, and it is important that silicon is densely deposited on the porous carbon during the deposition process and that the silicon-carbon composite has a uniform surface.

In particular, the negative electrode undergoes a process of applying a negative electrode slurry onto a negative electrode current collector layer and rolling it during manufacturing. In this case, there is a stability issue caused by a reaction of the silicon-carbon composite in the aqueous negative electrode slurry with moisture.

However, in the case of the silicon-carbon composite according to the present application, when the properties of the precursor porous carbon are adjusted and the deposition conditions of silicon are controlled during the manufacturing of the silicon-carbon composite, the deposition can become more uniform and dense. The silicon-carbon composite manufactured through this process exhibits improved processability when included in an aqueous negative electrode slurry, while also improving the capacity characteristics of the battery and simultaneously enhancing its life characteristics.

In particular, the silicon-carbon composite satisfies the time constant range of the present invention. When within the range, silicon in the silicon-carbon composite is more uniformly deposited inside rather than on the surface, making it difficult to come into contact with water in the aqueous slurry phase, thereby exhibiting excellent processability.

That is, with the above-mentioned characteristics, the negative electrode including the silicon-carbon composite according to the present application can secure capacity characteristics, improve resistance by reducing side reactions on the surface of the negative electrode active material, and mitigate life issues caused by volume expansion.

## BRIEF DESCRIPTION OF THE DRAWINGS

FIG. 1 is a view showing a stack structure of a negative electrode for a lithium secondary battery according to an exemplary embodiment of the present application.

FIG. 2 is a view showing a stack structure of a lithium secondary battery according to an exemplary embodiment of the present application.

FIG. 3 is a graph showing a process of deriving a time constant for Example 2 according to the present application.

FIG. 4 is an SEM image of a negative electrode active material layer containing a silicon carbon composite according to Example 1.

Fig. 5 is an SEM image of a negative electrode active material layer containing a silicon carbon composite according to Comparative Example 1.

## DETAILED DESCRIPTION

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In the present specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" refers to a particle size distribution, and refers to a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Note that the average particle diameter may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In an exemplary embodiment of the present application, the particle size or particle diameter may mean an average diameter or representative diameter of each crystal grain constituting the metal powder.

In the present specification, the description "a polymer includes a certain monomer as a monomer unit" means that the monomer participates in a polymerization reaction and is included as a repeating unit in the polymer. In the present specification, when a polymer includes a monomer, this is interpreted to be the same as when the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, the molecular weight refers to a weight average molecular weight unless particularly described otherwise.

Hereinafter, exemplary embodiments of the present invention will be described in detail with reference to the drawings so that one skilled in the art can readily implement the present invention. However, the present invention may be implemented in various different forms, and is not limited to the following descriptions.

An exemplary embodiment of the present specification provides a negative electrode active material including a silicon-carbon composite including porous carbon; and silicon deposited on the porous carbon, in which the silicon-carbon composite has a time constant (T1) of 150 to 1000, derived by fitting a graph of etching time (x-axis) vs. C/Si ratio (y-axis) obtained from XPS depth analysis with an exponential decay function.

When a silicon-carbon composite satisfying the specific range is used, the processability issues in aqueous negative electrode can be solved, and a negative electrode with excellent capacity and efficiency can be provided.

The present invention is characterized by including a silicon-carbon composite as a negative electrode active material. In other words, compared to using existing carbon-based active materials, the capacity characteristics can be improved, high-energy density can be achieved, and rapid charging performance can also be enhanced by also including the silicon-carbon composite.

In the present specification, the silicon-carbon composite is a composite of Si and C, and is distinguished from silicon carbide expressed as SiC. The silicon carbide does not react electrochemically with lithium, so all performance, including life, may be measured as 0.

In the present application, the silicon-based active material may be a silicon-carbon (Si/C) composite including porous carbon and silicon deposited on the porous carbon.

The Si/C composite may be a composite of silicon, graphite, and the like, and may form a structure in which a core composite of silicon, graphite, and the like is surrounded by graphene, amorphous carbon, or the like. In the silicon-carbon composite, silicon may be nano silicon. For example, the nano silicon may be silicon within a range of 1 nm to 999 nm.

In the present application, the XPS depth analysis refers to an analysis method that etches an analysis target over time and derives elemental content in the chemical state of the analysis target for each etching time.

The analysis conditions for the XPS depth analysis are the same as the analysis conditions used in the art, and specifically, analysis can be performed under the following conditions.

<Analysis Conditions>

- X-Ray source: Monochromated Al K α (1486.6 eV)
- X-Ray spot size: 400μm
- Sputtering gun: Monatomic Ar (energy: 1000 eV, current: low, raster width: 2mm)
- Etching rate: 0.09 nm/s for Ta 205
- Operation Mode: CAE (Constant Analyzer Energy) mode
- Survey scan: pass energy 200 eV, energy step 1 eV
- Narrow scan: scanned mode, pass energy 50 eV, energy stem 0.1 Ev
- Charge compensation: 0.1 V 150 Ma
- SF: Al THERMO1
- ECF: TPP2M
- BG subtraction: Smart

In the present application, for the silicon-carbon composite, the time constant as described above can be derived through the XPS depth analysis, and measurement can be performed by sampling the silicon-carbon composite powder alone.

In the present application, the silicon-carbon composite may have a time constant (T1) of 150 to 1000, derived by fitting a graph of etching time (x-axis) vs. C/Si ratio (y-axis) obtained from XPS depth analysis with an exponential decay function.

In another exemplary embodiment, the silicon-carbon composite may have a time constant (T1) of 150 to 1000, specifically 170 to 950, and more specifically 175 to 900, derived by fitting a graph of etching time (x-axis) vs. C/Si ratio (y-axis) obtained from XPS depth analysis with an exponential decay function.

In the present application, a large time constant means that the time for the C/Si ratio to reach saturation is longer. As the time constant increases, it may mean that silicon in the silicon-carbon composite is better deposited inside the active material rather than on the surface. As the time constant decreases, it may mean that silicon is relatively more deposited on the surface of the active material rather than the inside.

In this case, the present invention uses the silicon-carbon composite that satisfies the time constant range. When within the range, silicon in the silicon-carbon composite is more uniformly deposited inside rather than on the surface, making it difficult to come into contact with water in the aqueous slurry phase, thereby exhibiting excellent processability.

In particular, a large time constant indicates that the active material is well deposited inside; however, if the time constant exceeds the above range, silicon penetrates and is deposited excessively deep within the porous carbon substrate, leading to internal stress concentration caused by the volume expansion of silicon during charging and discharging. This results in cracking of the electrode structure or disruption of the conductive network, which lowers the efficiency of the electrochemical reaction and causes problems such as reduced long-term cycle life and capacity retention rate. Furthermore, if silicon is excessively present inside, the contact area with the electrolyte is relatively reduced, which may limit the development of initial capacity.

On the other hand, if the time constant is below the above range, silicon is deposited shallowly mainly on the particle surface. Consequently, volume changes during charging and discharging act directly on the external surface, making it easy for the silicon film to delaminate or crack. This leads to a decrease in the bonding strength between silicon and carbon, an increase in the electrical contact resistance of the electrode, and undesirable results such as a rapid decrease in capacity and reduced initial efficiency during repeated charging and discharging processes.

In an embodiment of the present application, the time constant can be derived by inputting data into a graph, where the C/Si elemental content ratio is assigned to the y-axis with respect to the x-axis of the etching time for the silicon-carbon composite, and then fitting the input data according to the following equation. In this case, the following equation can be expressed as an exponential decay function, and t1 can indicate a time constant.

[Formula]

$$y = y_0 + A_1 e^{-x/t_1}$$

In the present application, the time constant may be expressed as follows, and specifically refers to the time required to reach the final value. A shorter time constant may indicate that $e^{-1}$ is reached more rapidly.

$$\frac{y(t+t1)}{y(t)} = e^{-1}$$

In the present application, the C/Si elemental content ratio can be calculated using the following formula.

[Formula]

$$C_i = \frac{\dfrac{A_i}{RSF_i}}{\sum_{j=1}^{n} \dfrac{A_j}{RSF_j}}$$

In the above formula, *i* refers to the type of element intended to find, and j refers to the types of all elements measured through XPS. In addition, $C_i$ refers to the content ratio of an element, $A_i$ refers to the area modified in consideration of the inelastic mean free path in the solid, and $RSF_i$ refers to the relative sensitive factor. For example, when peaks of elements A and B are detected through XPS, the peak areas are 1000 and 500, respectively, and the RSF is 0.8 and 1.2, respectively, the content ratio of the element A can be calculated as

$$C_A = \frac{\dfrac{1000}{0.8}}{\dfrac{1000}{0.8} + \dfrac{500}{1.2}} = 0.75$$

.

In an exemplary embodiment of the present application, j may be silicon or carbon.
For reference, the relative sensitive factors of Si and C used in the XPS depth analysis are as follows.

$$RSF_{si} = 0.9$$

$$RSF_c = 1.0$$

In the present application, by fitting with the exponential decay function, the Rsquare value may be 0.95 or greater.
If the profile of the graph of etching time (x-axis) vs. C/Si ratio (y-axis) is similar to an exponential decay function and the Rsquare value does not fall within the specific range, the reliability of the time constant decreases. Therefore, the above Rsquare value must be satisfied.
In the present application, a negative electrode active material is provided which further includes a carbon coating layer on a surface of the silicon-carbon composite.
In the present application, the silicon may be included in an amount of 40 parts by weight or more and 60 parts by weight or less based on 100 parts by weight of the silicon-carbon composite.
In another exemplary embodiment, the silicon may be included in an amount of 40 parts by weight or more and 60 parts by weight or less, specifically 43 parts by weight or more and 55 parts by weight or less, and more specifically 45 parts by weight or more and 55 parts by weight or less, based on 100 parts by weight of the silicon-carbon composite.
When the amount of silicon deposited on the porous carbon is satisfied as described above and the properties of the porous carbon described below are adjusted, the above-mentioned time constant is satisfied to improve the capacity characteristics and to secure the life characteristics.

In the present application, the negative electrode active material may further include a carbon-based active material.

In the present application, the carbon-based active material may include graphite, and the graphite may include natural graphite and artificial graphite.

In the present application, an average particle diameter (D50) of the natural graphite may be 5 $\mu$m or more and 20 $\mu$m or less, and an average particle diameter (D50) of the artificial graphite may be 5 $\mu$m or more and 20 $\mu$m or less.

In another exemplary embodiment, the average particle diameter (D50) of the natural graphite may be 5 $\mu$m or more and 20 $\mu$m or less, preferably 7 $\mu$m or more and 18 $\mu$m or less, and more preferably 9 $\mu$m or more and 15 $\mu$m or less.

In another exemplary embodiment, the average particle diameter (D50) of the artificial graphite may be 5 $\mu$m or more and 20 $\mu$m or less, preferably 8 $\mu$m or more and 18 $\mu$m or less, and more preferably 10 $\mu$m or more and 16 $\mu$m or less.

In the present application, a weight ratio of the artificial graphite: the natural graphite based on 100 parts by weight of the carbon-based active material may be 60:40 to 80:20.

In another exemplary embodiment, the weight ratio of the artificial graphite: the natural graphite based on 100 parts by weight of the carbon-based active material may satisfy 60:40 to 80:20, preferably 65:35 to 78:22, and more preferably 70:30 to 75:25.

In the case of graphite, artificial graphite and natural graphite may be included. The artificial graphite has been confirmed to have superior cell characteristics compared to the natural graphite. Therefore, the use of natural graphite is reduced and the use of artificial graphite is increased. However, from a cost perspective, artificial graphite incurs high processing costs because coke needs to be fired and graphitized. In this regard, when the specific range is satisfied, the cell characteristics are improved while addressing the cost issue.

In the present application, there is provided the negative electrode active material in which the silicon-carbon composite is included in an amount of 80 parts by weight or less based on 100 parts by weight of the negative electrode active material.

In another exemplary embodiment, the silicon-carbon composite may be included in an amount of 80 parts by weight or less, specifically 75 parts by weight or less, more specifically 70 parts by weight or less, and 1 part by weight or more, 5 parts by weight or more, more specifically 10 parts by weight or more, based on 100 parts by weight of the negative electrode active material.

By including the negative electrode active material within the specific range, the capacity characteristics and energy density of the negative electrode can be secured. In other words, as the content of the silicon-carbon composite increases, the energy density can be improved, but the life characteristics deteriorate due to more severe volume expansion. Conversely, if the content of the silicon-carbon composite is low, neither high-energy density nor rapid charging performance can be secured. Therefore, when the content falls within the specific range, high-energy density can be secured while improving rapid charging performance.

Note that the average particle diameter (D50 particle size) of the silicon-carbon composite of the present invention may be 5 $\mu$m or more and 20 $\mu$m or less, specifically 5 $\mu$m to 18 um, and more specifically 5 $\mu$m to 15 um. When the average particle diameter falls within the specific range, a specific surface area of the particles falls within a suitable range, resulting in formation of the viscosity of the negative electrode slurry within an appropriate range. Accordingly, particles constituting the negative electrode slurry are smoothly dispersed. In addition, the size of the silicon-carbon composite has a value equal to or greater than the lower limit of the specific range, resulting in an excellent contact area between the silicon-carbon composite and the conductive material due to a composite composed of the conductive material and binder in the negative electrode slurry, which increases the likelihood of maintaining a conductive network, thereby improving the capacity retention rate. Note that, when the average particle diameter falls within the specific range, excessively large silicon particles are excluded, resulting in formation of a smooth surface of the negative electrode. Accordingly, a phenomenon of current density non-uniformity during charging and discharging can be prevented.

In an exemplary embodiment of the present application, the silicon-carbon composite generally has a characteristic BET surface area. The BET surface area of the silicon-carbon composite is preferably 0.01 to 150 $m^2$/g, more preferably 0.1 to 100 $m^2$/g, particularly preferably 0.2 to 80 $m^2$/g, and most preferably 0.2 to 18 $m^2$/g. The BET surface area is measured in accordance with DIN 66131 (using nitrogen).

In an exemplary embodiment of the present application, the silicon of the silicon-carbon composite may exist in, for example, a crystalline or amorphous form, and the silicon is preferably a spherical or fragment-shaped particle. Alternatively, but less preferably, the silicon may also have a fibrous structure or be present in the form of a silicon-containing film or coating.

In an exemplary embodiment of the present application, the silicon-carbon composite may have a non-spherical shape and its sphericity (circularity) is, for example, 0.9 or less, for example, 0.7 to 0.9, for example, 0.8 to 0.9, for example, 0.85 to 0.9.

In the present application, the circularity is determined by Formula 1-B below, in which A is an area and P is a boundary line.

[Formula 1-B]

$$4\pi A/P^2$$

In an exemplary embodiment of the present application, there is provided a negative electrode composition including the negative electrode active material described above.

In an exemplary embodiment of the present application, the cathode composition may further include a cathode conductive material and a cathode binder as needed.

In an exemplary embodiment of the present application, there is provided the negative electrode composition in which the negative electrode active material is included in an amount of 40 parts by weight or more based on 100 parts by weight of the negative electrode composition.

In another exemplary embodiment, the negative electrode active material may be included in an amount of 40 parts by weight or more, preferably 60 parts by weight or more, more preferably 65 parts by weight or more, and further preferably 70 parts by weight or more, and 99 parts by weight or less, preferably 98 parts by weight or less, and more preferably 96 parts by weight or less, based on 100 parts by weight of the negative electrode composition.

The negative electrode composition according to the present application uses the negative electrode active material satisfying a specific pore distribution capable of controlling the volume expansion and side reactions during charging and discharging even when the silicon-carbon composite having a significantly high capacity is used within the specific range. Accordingly, even when the silicon-carbon composite is included within the specific range, the negative electrode composition does not degrade the performance of the negative electrode and has excellent output characteristics in charging and discharging.

In the related art, it is general to use only graphite-based compounds as the negative electrode active material. However, in recent years, as the demand for high-capacity batteries is increasing, attempts to mix and use silicon-based active materials are increasing in order to increase capacity. However, in the case of a silicon-based active material, even when the characteristics of the silicon-based active material itself are adjusted as described above, the volume may rapidly expand during charging and discharging, thereby causing some problems of damaging the conductive path formed in the negative electrode active material layer.

Therefore, in an exemplary embodiment of the present application, the negative electrode conductive material may include one or more selected from the group consisting of a point-like conductive material, a planar conductive material, and a linear conductive material.

In an exemplary embodiment of the present application, the point-like conductive material refers to a point-like or spherical conductive material that may be used for improving conductivity of the negative electrode and has conductivity without causing a chemical change. Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2$/g or greater and 70 $m^2$/g or less, preferably 45 $m^2$/g or greater and 65 $m^2$/g or less, and more preferably 50 $m^2$/g or greater and 60 $m^2$/g or less.

In an exemplary embodiment of the present application, a content of the functional group (volatile matter) of the point-like conductive material may fall within a range of 0.01% or more and 1% or less, preferably 0.01% or more and 0.3% or less, and more preferably 0.01% or more and 0.1% or less.

In particular, when the content of the functional group of the point-like conductive material falls within the specified range, a functional group is present on a surface of the point-like conductive material, so that the point-like conductive material can be smoothly dispersed in a solvent when water is used as the solvent. In particular, in the present invention, as the specific silicon-based active material is used, a functional group content of the point-like conductive material can be lowered, which exhibits an excellent effect in improving dispersibility.

In an exemplary embodiment of the present application, the point-like conductive material having the content of the functional group within the range described above is included together with the silicon-based active material, and the content of the functional group can be adjusted according to a degree of heat treatment of the point-like conductive material.

In an exemplary embodiment of the present application, a particle diameter of the point-like conductive material may be 10 nm to 100 nm, preferably 20 nm to 90 nm, and more preferably 20 nm to 60 nm.

In an exemplary embodiment of the present application, the conductive material may include a planar conductive material.

The planar conductive material improves conductivity by increasing surface contact between silicon-based particles in the negative electrode, and at the same time, can serve to suppress disconnection of the conductive path due to the volume expansion. The planar conductive material may be expressed as a plate-like conductive material or a bulk-type conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, an average particle diameter (D50) of the planar conductive material may be 2 to 7 $\mu$m, specifically 3 to 6 $\mu$m, and more specifically 3.5 to 5 $\mu$m. When the specified range is satisfied, the sufficient particle size results in easy dispersion without causing an excessive increase in viscosity of the negative electrode slurry. Therefore, the dispersion effect is excellent when performing dispersion using the same equipment and time.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 1 $m^2$/g or greater.

In another exemplary embodiment, the planar conductive material may have a BET specific surface area of 1 $m^2$/g or greater and 500 $m^2$/g or less, preferably 5 $m^2$/g or greater and 300 $m^2$/g or less, and more preferably 5 $m^2$/g or greater and 250 $m^2$/g or less.

For the planar conductive material of the present application, a planar conductive material with a high specific surface area or a planar conductive material with a low specific surface area may be used.

In another exemplary embodiment, the planar conductive material is a planar conductive material with a high specific surface area, and the BET specific surface area may fall within a range of 50 $m^2$/g or greater and 500 $m^2$/g or less, preferably 80 $m^2$/g or greater and 300 $m^2$/g or less, and more preferably 100 $m^2$/g or greater and 300 $m^2$/g or less.

In another exemplary embodiment, the planar conductive material is a planar conductive material with a low specific surface area, and the BET specific surface area may fall within a range of 1 $m^2$/g or greater and 40 $m^2$/g or less, preferably 5 $m^2$/g or greater and 30 $m^2$/g or less, and more preferably 5 $m^2$/g or greater and 25 $m^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In the present application, there is provided the negative electrode composition in which the negative electrode conductive material is included in an amount of 20 parts by weight or less on the basis of 100 parts by weight of the negative electrode composition.

In another exemplary embodiment, based on 100 parts by weight of the negative electrode composition, the negative electrode conductive material may be included in an amount of 20 parts by weight or less, 17 parts by weight or less, or 15 parts by weight or less, and 0.01 parts by weight or more, or 0.02 parts by weight or more.

The negative electrode conductive material according to the present application has a completely different configuration from that of a positive electrode conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the planar conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a planar or plate-like shape, and may be expressed as plate-like graphite. That is, the planar conductive material is a material that is included in order to maintain a conductive path in the negative electrode active material layer, and refers to a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

That is, in an exemplary embodiment of the present application, artificial graphite or natural graphite, which is a carbon-based active material, has a point-like shape, and a BET specific surface area thereof may fall within a range of 0.1 $m^2/g$ or greater and 4.5 $m^2/g$ or less. In addition, plate-like graphite, which is a planar conductive material, has a planar shape, and a BET specific surface area thereof may be 5 $m^2/g$ or greater.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The negative electrode binder according to an exemplary embodiment of the present application serves to hold the active material and the conductive material in order to prevent distortion and structural deformation of the negative electrode structure during volume expansion and relaxation of the silicon-based active material. When such roles are satisfied, all of the general binders can be applied. Specifically, an aqueous binder may be used, and more specifically, a PAM-based binder may be used.

In an exemplary embodiment of the present application, the negative electrode binder may be included in an amount of 30 parts by weight or less, preferably 25 parts by weight or less, and more preferably 20 parts by weight or less, and 1 part by weight or more, and 3 parts by weight or more based on 100 parts by weight of the negative electrode composition.

An exemplary embodiment of the present application provides a method for manufacturing a negative electrode active material including the steps of: forming a silicon-carbon composite by depositing silicon on porous carbon,, in which in the depositing the silicon on the porous carbon to form a silicon-carbon composite, a deposition temperature is 500°C or higher and 800°C or lower, a flow rate of silicon is 50 ml/min to 250 ml/min, and the silicon-carbon composite has a time constant (T1) of 150 to 1000, derived by fitting a graph of etching time (x-axis) vs. C/Si ratio (y-axis) obtained from XPS depth analysis with an exponential decay function.

In the case of the silicon-carbon composite according to the present application, when depositing silicon on porous carbon, the time constant value can be controlled by adjusting the temperature range as described above and adjusting the deposition flow rate within the said range.

Specifically, when the deposition flow rate increases or the deposition time increases, the time constant value tends to decrease, and as the deposition temperature increases, the time constant tends to increase. Furthermore, when the coating time and temperature increase, the time constant tends to increase, and when the activation temperature of the porous carbon increases, the time constant may show a tendency to increase.

In the present application, in the step of depositing silicon on the porous carbon to form a silicon-carbon composite, $SiH_4/N_2$ gas may be used as a silicon source, and specifically, a mixed gas in a ratio of 90/10 to 98/2 may be used.

In the present application, after depositing silicon on the porous carbon, a step of forming a carbon layer on a surface of the silicon-carbon composite in which silicon is deposited may be further included.

In this case, the step of forming a carbon layer may be performed by coating with acetylene, and specifically, an acetylene coating temperature may fall within a range of 500°C or higher and 700°C or lower.

In the present application, a pore volume of the porous carbon in the silicon-carbon composite may be 0.75 g/cm³ to 1.2 g/cm³.

In the present application, there is provided the method for manufacturing a negative electrode active material in which in the step of depositing silicon on the porous carbon to form a silicon-carbon composite, a deposition pressure is 0.1 Torr or higher and 15 Torr or lower.

In the present application, the deposition pressure in the step of depositing silicon on the porous carbon to form a silicon-carbon composite may be 0.1 Torr or higher and 15 Torr or lower, specifically 0.5 Torr or higher and 10 Torr or lower.

In the present application, an average particle diameter (D50) of the porous carbon may be 8 μm or more and 20 μm or less, specifically 9 μm or more and 15 μm or less.

In the present application, the porous carbon may have a proportion of first pores with a diameter of less than 2 nm of 80% or more and a proportion of second pores with a diameter of 2 nm or more and 50 nm or less of 20% or less, when measured by a nitrogen adsorption method.

In addition, there is provided the method for manufacturing a negative electrode active material in which the porous carbon has a circularity of 0.7 to 0.9 as defined by the following formula 1.

[Formula 1]

$$4\pi A/P^2$$

In Formula 1, A is an area and P is a boundary line.

That is, when the properties of porous carbon are controlled as described above, mechanical rigidity can be enhanced, and when silicon is deposited using porous carbon satisfying the above properties, densification and deposition uniformity can be improved.

In an exemplary embodiment of the present application, there is provided a negative electrode for a lithium secondary battery including: a negative electrode current collector layer; and a negative electrode active material layer including the negative electrode composition according to the present application or a cured product thereof formed on one surface or both surfaces of the negative electrode current collector layer.

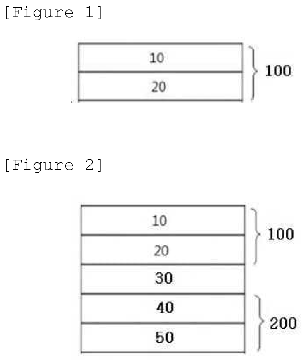

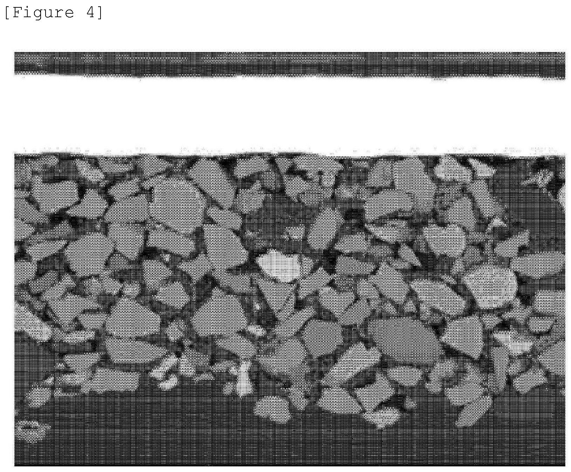

FIG. 1 is a view showing a stack structure of a negative electrode for a lithium secondary battery according to an exemplary embodiment of the present application. Specifically, a negative electrode 100 for a lithium secondary battery can be seen which includes a negative electrode active material layer 20 on one surface of a negative electrode current collector layer 10. FIG. 4 shows that the negative electrode active material layer is formed on one surface, but the negative electrode active material layer may be formed on both surfaces of the negative electrode current collector layer.

In an exemplary embodiment of the present application, the negative electrode for a lithium secondary battery may be formed by applying and drying a negative electrode slurry including the negative electrode composition to one surface or both surfaces of the negative electrode current collector layer.

In this case, the negative electrode slurry may include the negative electrode composition described above, and a slurry solvent.

In an exemplary embodiment of the present application, a solid content of the negative electrode slurry may fall within a range of 5% or more and 40% or less.

In another exemplary embodiment, the solid content of the negative electrode slurry may fall within a range of 5% or more and 40% or less, preferably 7% or more and 35% or less, and more preferably 10% or more and 30% or less.

The solid content of the negative electrode slurry may refer to a content of the negative electrode composition included in the negative electrode slurry, and may refer to a content of the negative electrode composition based on 100 parts by weight of the negative electrode slurry.

When the solid content of the negative electrode slurry falls within the specified range, the viscosity is appropriate during formation of the negative electrode active material layer, so that particle agglomeration of the negative electrode composition is minimized to efficiently form the negative electrode active material layer.

In an exemplary embodiment of the present application, the slurry solvent can be used without limitation as long as it can dissolve the negative electrode composition, and specifically, water or NMP may be used.

In an exemplary embodiment of the present application, the negative electrode current collector layer generally has a thickness of 1 μm to 100 μm. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present application, there is provided the negative electrode for a lithium secondary battery in which a thickness of the negative electrode current collector layer is 1 $\mu$m or greater and 100 $\mu$m or less and a thickness of the negative electrode active material layer is 5 $\mu$m or greater and 500 $\mu$m or less.

However, the thickness may be variously modified depending on a type and a use of negative electrode used, and is not limited thereto.

In an exemplary embodiment of the present application, a porosity of the negative electrode active material layer may fall within a range of 10% or greater and 60% or less.

In another exemplary embodiment, the porosity of the negative electrode active material layer may fall within a range of 10% or greater and 60% or less, preferably 20% or greater and 50% or less, and more preferably 25% or greater and 45% or less.

The porosity varies depending on compositions and contents of the silicon-based active material, the conductive material, and the binder included in the negative electrode active material layer, and in particular, satisfies the range described above when the silicon-based active material and the conductive material are included in the specific compositions and contents according to the present application, so that the electrode has electric conductivity and resistance within appropriate ranges.

An exemplary embodiment of the present application provides a lithium secondary battery including a positive electrode; and the negative electrode for a lithium secondary battery according to the present application.

Additionally, it may further include a separator provided between the anode and the cathode; and may further include an electrolyte as needed.

FIG. 2 is a view showing a stack structure of a lithium secondary battery according to an exemplary embodiment of the present application. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a stacked structure with a separator 30 interposed therebetween.

The secondary battery according to an exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder, together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration pathway for lithium ions, in which any separator may be used as the separator without particular limitation as long as it is typically used in a secondary battery, and particularly, a separator having high moisture-retention ability for an electrolyte as well as a low resistance to the migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used.

In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving service life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Preparation Example>**

**<Example 1>**

**- Preparation of Silicon-Carbon Composite**

After carbonizing the porous carbon raw material by heat treatment at 900°C in an inert gas atmosphere, the carbonized porous carbon raw material was pulverized and classified. Subsequently, porous carbon was produced by physically activating the material through a reaction with steam at 800°C. The produced porous carbon was pulverized and classified to produce particles with an average particle diameter D50 of 9 $\mu$m. The pore volume of the porous carbon obtained in this case was 0.80 g/cm$^3$ to 0.9 g/cm$^3$.

Subsequently, the porous carbon was washed and dried. Thereafter, a mixed gas of $SiH_4/N_2$ in a ratio of 95/5 was passed over the porous carbon at a flow rate of 75 ml/min under conditions of a pressure of 3 torr and a temperature of 650°C for 2 hours, resulting in the formation of a silicon-carbon composite.

Subsequently, the silicon-carbon composite was placed in an electric furnace, and acetylene gas was passed over it at 600°C, resulting in the preparation of a silicon-carbon composite including a carbon layer on its outermost surface.

**<Example 2>**

**- Preparation of Silicon-Carbon Composite**

A silicon-carbon composite was prepared in the same manner as in Example 1, except that, in Example 1, the physical activation reaction was performed at 900°C to produce porous carbon, and the pore volume of the porous carbon was 0.90 g/cm$^3$ to 1.0 g/cm$^3$.

**<Example 3>**

**- Preparation of Silicon-Carbon Composite**

A silicon-carbon composite was prepared in the same manner as in Example 1, except that a mixed gas of $SiH_4/N_2$ in a ratio of 95/5 was passed over the porous carbon at a flow rate of 75 ml/min under conditions of a pressure of 1 torr and a temperature of 650°C for 2 hours.

**<Example 4>**

**- Preparation of Silicon-Carbon Composite**

A silicon-carbon composite was prepared in the same manner as in Example 1, except that a mixed gas of $SiH_4/N_2$ in a ratio of 98/2 was passed over the porous carbon at a flow rate of 50 ml/min and a temperature of 700°C for 2 hours, afterwards, the acetylene gas flowed at 650°C.

**<Comparative Example 1>**

**- Preparation of Silicon-Carbon Composite**

A silicon-carbon composite was prepared in the same manner as in Example 1, except that a mixed gas of $SiH_4/N_2$ in a ratio of 95/5 was passed over the porous carbon at a flow rate of 300 ml/min under conditions of a pressure of 3 torr and a temperature of 650°C for 2 hours.

**<Comparative Example 2>**

**- Preparation of Silicon-Carbon Composite**

A silicon-carbon composite was prepared in the same manner as in Example 1, except that the physical activation reaction was performed at 600°C to produce porous carbon, and the pore volume of the porous carbon was 0.65 g/cm$^3$ to 0.75 g/cm$^3$.

**<Comparative Example 3>**

**- Preparation of Silicon-Carbon Composite**

A silicon-carbon composite was prepared in the same manner as in Example 1, except that a mixed gas of $SiH_4/N_2$ in a ratio of 95/5 was passed over the porous carbon at a flow rate of 75 ml/min under conditions of a pressure of 100 torr and a temperature of 650°C for 2 hours.

**<Comparative Example 4>**

**- Preparation of Silicon-Carbon Composite**

A silicon-carbon composite was prepared in the same manner as in Example 1, except that the silicon-carbon composite was placed in an electric furnace, and acetylene gas was passed over it at 450°C.

**<Comparative Example 5>**

**- Preparation of Silicon-Carbon Composite**

A silicon-carbon composite was prepared in the same manner as in Example 1, except that a mixed gas of $SiH_4/N_2$ in a ratio of 95/5 was passed over the porous carbon at a flow rate of 75 ml/min under conditions of a pressure of 3 torr and a temperature of 950°C for 2 hours.

**<Comparative Example 6>**

**- Preparation of Silicon-Carbon Composite**

A silicon-carbon composite was prepared in the same manner as in Example 1, except that the porous carbon was only pulverized without classification to obtain particles with D50 of 7 μm.

**<Comparative Example 6>**

**- Preparation of Silicon-Carbon Composite**

A silicon-carbon composite was prepared in the same manner as Example 1, except that a mixed gas with a ratio of SiH4/N2 = 95/5 was deposited on porous carbon at a flow rate of 250 ml/min at 400°C, and then coated with acetylene gas at 800°C.

**<Reference Example 1>**

**- Preparation of Silicon-Carbon Composite**

A silicon-carbon composite was prepared in the same manner as in Example 1, except that the average particle diameter D50 of the porous carbon was 5 μm.

The XPS depth analysis was performed on the silicon-carbon composite powders of the Examples and Comparative Examples, and specifically, the analysis was performed under the following analysis conditions, and the results are shown in Table 1.

<Analysis Conditions>

-    X-Ray source: Monochromated Al K α (1486.6 eV)
-    X-Ray spot size: 400μm
-    Sputtering gun: Monatomic Ar (energy: 1000 eV, current: low, raster width: 2mm)
-    Etching rate: 0.09 nm/s for Ta 205
-    Operation Mode: CAE (Constant Analyzer Energy) mode
-    Survey scan: pass energy 200 eV, energy step 1 eV

- Narrow scan: scanned mode, pass energy 50 eV, energy stem 0.1 Ev
- Charge compensation: 0.1 V 150 Ma
- SF: Al THERMO1
- ECF: TPP2M
- BG subtraction: Smart

[Table 1]

|  | Time constant (T1) | R square |
|---|---|---|
| Example 1 | 268 | 0.9758 |
| Example 2 | 220 | 0.9940 |
| Example 3 | 455 | 0.9965 |
| Example 4 | 861 | 0.9582 |
| Comparative Example 1 | 114 | 0.9632 |
| Comparative Example 2 | 131 | 0.9975 |
| Comparative Example 3 | 120 | 1.0000 |
| Comparative Example 4 | 133 | 0.9764 |
| Comparative Example 5 | 65 | 0.9985 |
| Comparative Example 6 | 148 | 0.9638 |
| Comparative Example 7 | 1157 | 0.9687 |
| Reference Example 1 | 228 | 0.9638 |

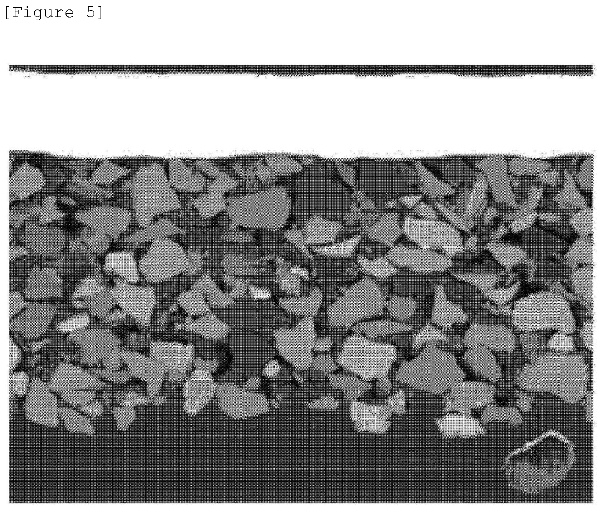

For reference, Fig. 4 is an SEM image of a negative electrode active material layer containing a silicon-carbon composite according to Example 1, and Fig. 5 is an SEM image of a negative electrode active material layer containing a silicon-carbon composite according to Comparative Example 1. Specifically, Figs. 4 and 5 are SEM images of a negative electrode containing only a silicon-carbon composite, a conductive material (carbon black, single-walled carbon nanotube), and a binder (CMC, SBR).

In Fig. 4, it was confirmed that the deposition uniformity of silicon is superior compared to the case of Fig. 5, as the time constant satisfies the scope of the present application.

Specifically, in the case of high uniformity (Fig. 4), the difference in brightness between silicon-carbon composite particles is small (i.e., it appears brighter as more silicon is deposited), indicating that the silicon deposition is uniform. Furthermore, silicon is formed with a relatively uniform thickness throughout the porous carbon particles and is evenly distributed both inside the pores and on the particle surface. Accordingly, it can be seen that the boundaries between the silicon layers are smooth, and the overall electrode structure remains dense and uniform.

On the other hand, in the case of low uniformity (Fig. 5), it was observed that silicon was deposited unevenly, as there was a significant difference in brightness between the silicon-carbon composite particles (i.e., the less silicon is deposited, the darker it appears). Furthermore, it was observed that silicon grew with an uneven thickness, concentrated in specific areas, particularly near the particle surface or pore entrance, and in some areas, parts where silicon was hardly deposited were also observed.

In this case, the derivation of the time constant in the Examples, Comparative Examples, and Reference Examples was conducted as follows.

1) The silicon-carbon composite powder was sampled, and the elemental contents (atm%) in the chemical state (C, Si) of the active material for each etching time (0s, 10s, 30s, 50s, 100s, 200s, 300s, 500s, 1000s, 1500s, 2000s, 3000s, 4000s, 5000s, 7000s) were derived.

The ratio of the derived C and Si elemental contents was expressed as C/Si ratio, which was assigned to the y-axis, while the etching time was assigned to the x-axis, and the data were plotted on the graph.

3) The time constant was derived by fitting the input data according to the following equation.

$$y = y_0 + A_1 e^{-x/t_1}$$

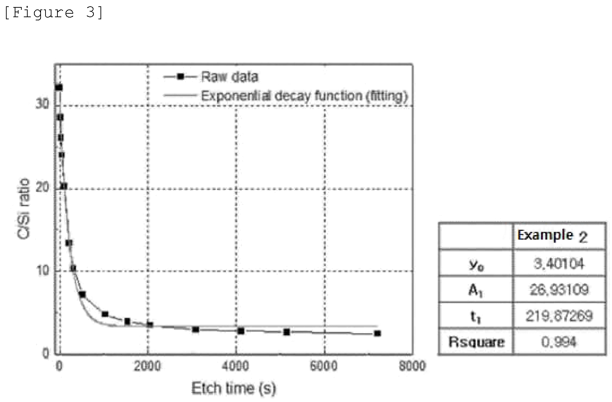

FIG. 3 is a graph showing a process of deriving a time constant for Example 2 according to the present application. Specifically, the graph fitted to the exponential decay function based on the raw data (black line) can be represented by the red line.

**<Preparation of Negative Electrode>**

As a negative electrode active material, the silicon-carbon composite, natural graphite, and artificial graphite of Table 1 were used in a weight ratio of 10:15:75, and distilled water was used as a solvent.
Specifically, the negative electrode composition was prepared by mixing a negative electrode active material, a conductive agent (carbon black, single-walled carbon nanotube (SWCNT)), and a binder (carboxymethyl cellulose (CMC) and styrene-butadiene rubber (SBR)) in a weight ratio of 95.3:1:3.7 to prepare a negative electrode slurry.
The negative electrode slurry was applied to a 15 $\mu$m-thick Cu metal thin film, followed by drying at a circulating air temperature of 60°C. Then, after being roll-pressed, the thin film was dried in a vacuum oven at 130°C for about one day and punched into a circular shape with an area of 1.7671 cm$^2$ to prepare a negative electrode (rolling density 1.5 g/cc, porosity: 28%).

**<Preparation of Secondary Battery>**

A positive electrode slurry was prepared by adding LiNi$_{0.6}$Co$_{0.2}$Mn$_{0.2}$O$_2$ (average particle diameter (D50): 15 $\mu$m) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry in a weight ratio of 97:1.5:1.5.
The positive electrode slurry was coated on an aluminum current collector (thickness: 12 $\mu$m) serving as a positive electrode current collector, which was then roll-pressed, dried in a vacuum oven at 130°C for 8 hours, and then punched into a circular shape with an area of 1.4875 cm$^2$ to prepare a positive electrode.
A lithium secondary battery was prepared by interposing a polyethylene separator between the positive electrode and the negative electrode of the Examples and the Comparative Examples and injecting an electrolyte.
The electrolyte was obtained by dissolving LiPF$_6$ to a concentration of 1 M in a mixed solution containing an additive in which ethylene carbonate (EC) and ethyl methyl carbonate (EMC) were mixed in a ratio of 3:7.

**<Experimental Example>**

**Experimental Example 1: Coin Half Cell Capacity/Efficiency Evaluation**

The capacity and efficiency of the first cycle of the secondary batteries including the negative electrodes prepared in the Examples and Comparative Examples were measured using an electrochemical charging and discharging device. Tests were conducted using lithium metal as a counter electrode of the negative electrode. Lithiation was tested under CC/CV (5 mV/0.005 C current cut-off) and delithiation was tested under CC 1.5 V cut-off condition.

discharge capacity (mAh/g) = 1st cycle delithiation capacity (mAh)/negative electrode active material weight (g)

initial efficiency (%) = {(1st cycle delithiation capacity)/(1st cycle lithiation capacity)} X 100

**Experimental Example 2: Cell Life Performance Results**

For the secondary batteries including the negative electrodes manufactured in the Examples and Comparative Examples, the life and capacity retention rate were evaluated using an electrochemical charging and discharging device. The in-situ cycle test was conducted on the secondary battery at 4.2-2.5 V 1C/1C for up to 300 cycles.

life retention rate (%) = {(discharge capacity at 300th cycle)/(discharge capacity at 1st cycle)} X 100

**Experimental Example 3: Rate of Change of Slurry Viscosity**

To measure the rate of change of slurry viscosity, a slurry was prepared by mixing graphite, the negative electrode active material, carbon black, CMC, and PAA in a weight ratio of 77:20:1:1:1. For the prepared slurry, the shear viscosity at shear rate = 1Hz was measured, and the amounts of change thereof over time was determined and compared.
The amount of change (%) in shear viscosity was derived by the following calculation formula.

Amount of change (%) in shear viscosity = ((shear viscosity of slurry after 2 days - shear viscosity of slurry immediately after mixing)/shear viscosity of slurry immediately after mixing) $\times$ 100

## Experimental Example 4: Rate of Change of Pouch Volume

To measure the rate of change of slurry viscosity, a slurry was prepared by mixing graphite, the negative electrode active material, carbon black, CMC, and PAA in a weight ratio of 77:20:1:1:1. 20 g of the prepared slurry was placed in a pouch, which was then sealed and stored at 40°C for 2 days. After the storage, the volume was measured to compare the rate of change in volume.
The evaluation results of Experimental Examples 1 to 4 are shown in Table 2 below.

[Table 2]

|  | Discharge capacity (mAh/g) | Initial efficiency (%) | Capacity retention rate (%) | Rate of change of slurry viscosity (%, after 2 days) | Rate of change of pouch volume (%, @40°C, after 2 days) |
|---|---|---|---|---|---|
| Example 1 | 508 | 91.1 | 92.1 | -1.6 | 0.5 |
| Example 2 | 505 | 91.3 | 91.9 | -4.2 | 3.8 |
| Example 3 | 502 | 90.5 | 91.1 | -0.5 | 0.2 |
| Example 4 | 500 | 90.1 | 90.3 | 0.1 | 0.0 |
| Comparative Example 1 | 499 | 90.0 | 85.4 | -38.0 | 28.9 |
| Comparative Example 2 | 495 | 90.2 | 80.7 | -56.5 | 35.1 |
| Comparative Example 3 | 475 | 88.1 | 73.1 | -19.5 | 12.6 |
| Comparative Example 4 | 495 | 89.6 | 84.4 | -47.6 | 32.6 |
| Comparative Example 5 | 480 | 89.0 | 78.9 | -40.1 | 29.4 |
| Comparative Example 6 | 490 | 89.3 | 82.8 | -22.8 | 15.5 |
| Comparative Example 7 | 472 | 87.5 | 79.9 | 0.3 | 0.0 |
| Reference Example 1 | 492 | 89.6 | 72.7 | -42.1 | 30.2 |

The silicon-carbon composites of the Examples according to the present application satisfied the specific time constant range. It was confirmed that when within the range, silicon in the silicon-carbon composite is more uniformly deposited inside rather than on the surface, making it difficult to come into contact with water in the aqueous slurry phase, thereby exhibiting excellent processability and a low rate of change of slurry viscosity.
That is, it was confirmed through Table 2 that with the above-mentioned characteristics, the negative electrode including the silicon-carbon composite according to the present application can secure capacity characteristics, improve resistance by reducing side reactions on the surface of the negative electrode active material, and mitigate life issues caused by volume expansion.
For reference, in Comparative Example 1, the flow rate was high, so silicon was not uniformly deposited inside during silicon deposition. Consequently, the time constant was found to be outside the specific range, and silicon was deposited on the surface, resulting in poor battery performance and aqueous slurry processability. In Comparative Example 2, since the volume of the pores of the porous carbon raw material was small, all the internal pores were filled with silicon and then silicon was deposited on the surface. Consequently, the time constant was found to be outside the specific range of the present application, resulting in poor battery performance and aqueous slurry processability.
In Comparative Examples 3 and 5, silicon was not uniformly deposited in the pores of the porous carbon during the silicon deposition process at lower pressure and higher temperature, respectively. Consequently, the time constant was found to be outside the specific range, resulting in poor battery performance and aqueous slurry processability.
In Comparative Example 6, the same deposition and coating processes were conducted as in the Examples, but the particle size was small, so that the internal pores were filled with silicon and then remaining silicon was deposited on the surface. Consequently, the time constant was found to be outside the specific range, resulting in poor battery performance and aqueous slurry processability.

In Comparative Example 7 was a case where the thermal decomposition and surface diffusion of the vapor phase precursor did not occur sufficiently during the process of depositing silicon at a low temperature, resulting in reduced coating uniformity. At low temperatures, the decomposition rate of the precursor and the surface diffusion coefficient decreased rapidly, so the active species could not reach deep into the pores and silicon grew selectively, confined to the outer surface or near the pore entrance. Consequently, a variation in the thickness of the silicon coating layer occurred, and as a result, a phenomenon was observed where the distribution of silicon inside and outside the porous structure became nonuniform.

**Claims**

1. A negative electrode active material comprising a silicon-carbon composite comprising:

   porous carbon; and
   silicon deposited on the porous carbon,
   wherein the silicon-carbon composite has a time constant (T1) of 150 to 1000, derived by fitting a graph of etching time (x-axis) vs. C/Si ratio (y-axis) obtained from XPS depth analysis with an exponential decay function.

2. The negative electrode active material of claim 1, further comprising a carbon coating layer on a surface of the silicon-carbon composite.

3. The negative electrode active material of claim 1, wherein the silicon is included in an amount of 40 parts by weight or more and 60 parts by weight or less, based on 100 parts by weight of the silicon-carbon composite.

4. The negative electrode active material of claim 1, wherein the silicon-carbon composite has an average particle diameter (D50) of 5 $\mu$m or more and 20 $\mu$m or less.

5. The negative electrode active material of claim 1, further comprising a carbon-based active material.

6. The negative electrode active material of claim 1, wherein the silicon-carbon composite is included in an amount of 80 parts by weight or less based on 100 parts by weight of the negative electrode active material.

7. A method for manufacturing a negative electrode active material, the method comprising:

   depositing silicon on porous carbon to form a silicon-carbon composite,
   wherein in the depositing the silicon on the porous carbon to form a silicon-carbon composite, a deposition temperature is 500°C or higher and 800°C or lower, and a flow rate of silicon is 50 ml/min to 250 ml/min, and the silicon-carbon composite has a time constant (T1) of 150 to 1000, derived by fitting a graph of etching time (x-axis) vs. C/Si ratio (y-axis) obtained from XPS depth analysis with an exponential decay function.

8. The method of claim 7, wherein the porous carbon has a proportion of first pores with a diameter of less than 2 nm of 80% or more, when measured by a nitrogen adsorption method, and
   the porous carbon has a proportion of second pores with a diameter of 2 nm or more and 50 nm or less of 20% or less, when measured by a nitrogen adsorption method.

9. The method of claim 7, wherein in the depositing the silicon on the porous carbon to form a silicon-carbon composite, the deposition pressure is 0.1 Torr or higher and 15 Torr or lower.

10. A negative electrode composition comprising:
    the negative electrode active material of any one of claims 1 to 6.

11. The negative electrode composition of claim 10, wherein the negative electrode active material is included in an amount of 40 parts by weight or more based on 100 parts by weight of the negative electrode composition.

12. A negative electrode for a lithium secondary battery, comprising:

a negative electrode current collector layer; and
a negative electrode active material layer provided on one surface or both surfaces of the negative electrode current collector layer,
wherein the negative electrode active material layer comprises the negative electrode composition of claim 10 or a cured product thereof.

13. The negative electrode for a lithium secondary battery of claim 12, wherein the negative electrode current collector layer has a thickness of 1 $\mu$m or greater and 100 $\mu$m or less, and
a thickness of the negative electrode active material layer is 5 $\mu$m or greater and 500 $\mu$m or less.

14. A lithium secondary battery comprising:

a positive electrode; and
the negative electrode for a lithium secondary battery of claim 12.

[Figure 1]

[Figure 2]

[Figure 3]

[Figure 4]

[Figure 5]

## INTERNATIONAL SEARCH REPORT

| International application No. |
|---|
| **PCT/KR2025/017938** |

### A. CLASSIFICATION OF SUBJECT MATTER

**H01M 4/587**(2010.01)i; **H01M 4/38**(2006.01)i; **H01M 4/36**(2006.01)i; **H01M 4/133**(2010.01)i; **H01M 10/0525**(2010.01)i; **C01B 32/956**(2017.01)i; **C01B 32/05**(2017.01)i; **C01B 33/02**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/587(2010.01); C01B 32/00(2017.01); C01B 32/05(2017.01); C01B 32/33(2017.01); C01B 32/336(2017.01); H01M 10/052(2010.01); H01M 4/36(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 다공성 탄소(porous carbon), 실리콘(silicon), 증착(deposition), 활성화(activation), 복합체(composite), 에칭시간(etching time), C/Si ratio, 시간상수(time constant), 온도(temperature), 유량(flow rate), 압력(pressure)

### C. DOCUMENTS CONSIDERED TO BE RELEVANT

| Category* | Citation of document, with indication, where appropriate, of the relevant passages | Relevant to claim No. |
|---|---|---|
| A | WO 2024-061099 A1 (BTR NEW MATERIAL GROUP CO., LTD. et al.) 28 March 2024 (2024-03-28) <br> pages 1-18 | 1-14 |
| A | KR 10-2023-0016213 A (SHOWA DENKO K.K.) 01 February 2023 (2023-02-01) <br> paragraphs [0037]-[0103], [0307]-[0335] | 1-14 |
| A | KR 10-2023-0131648 A (SK ON CO., LTD.) 14 September 2023 (2023-09-14) <br> paragraphs [0011], [0017], [0030], [0058]-[0069], [0110]-[0130] | 1-14 |
| A | KR 10-2020-0065562 A (POSCO et al.) 09 June 2020 (2020-06-09) <br> paragraphs [0015]-[0018], [0149], [0150], [0156]-[0159] | 1-14 |
| A | KR 10-2021-0110198 A (KOREA RESEARCH INSTITUTE OF CHEMICAL TECHNOLOGY) 07 September 2021 (2021-09-07) <br> paragraphs [0065]-[0068], [0076], [0090], [0100], [0102], [0104] | 1-14 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 February 2026** | **27 February 2026** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**TRANSLATION**

**INTERNATIONAL SEARCH REPORT**
**Information on patent family members**

International application No.

**PCT/KR2025/017938**

| Patent document cited in search report | | | Publication date (day/month/year) | Patent family member(s) | | | Publication date (day/month/year) |
|---|---|---|---|---|---|---|---|
| WO | 2024-061099 | A1 | 28 March 2024 | CN | 117790701 | A | 29 March 2024 |
| | | | | EP | 4593109 | A1 | 30 July 2025 |
| | | | | JP | 2025-512505 | A | 17 April 2025 |
| | | | | KR | 10-2024-0163123 | A | 18 November 2024 |
| | | | | US | 2025-0038184 | A1 | 30 January 2025 |
| KR | 10-2023-0016213 | A | 01 February 2023 | CN | 115667136 | A | 31 January 2023 |
| | | | | CN | 115667136 | B | 06 February 2024 |
| | | | | EP | 4159681 | A1 | 05 April 2023 |
| | | | | EP | 4159681 | B1 | 13 August 2025 |
| | | | | EP | 4160726 | A1 | 05 April 2023 |
| | | | | EP | 4160726 | B1 | 26 November 2025 |
| | | | | JP | 2021-187733 | A | 13 December 2021 |
| | | | | JP | 7749337 | B2 | 06 October 2025 |
| | | | | KR | 10-2023-0015992 | A | 31 January 2023 |
| | | | | KR | 10-2023-0016214 | A | 01 February 2023 |
| | | | | KR | 10-2023-0017259 | A | 03 February 2023 |
| | | | | KR | 10-2723357 | B1 | 31 October 2024 |
| | | | | KR | 10-2742523 | B1 | 17 December 2024 |
| | | | | KR | 10-2746766 | B1 | 27 December 2024 |
| | | | | US | 12494479 | B2 | 09 December 2025 |
| | | | | US | 2023-0216025 | A1 | 06 July 2023 |
| | | | | US | 2025-0219053 | A1 | 03 July 2025 |
| | | | | WO | 2021-241747 | A1 | 02 December 2021 |
| | | | | WO | 2021-241748 | A1 | 02 December 2021 |
| | | | | WO | 2021-241749 | A1 | 02 December 2021 |
| | | | | WO | 2021-241750 | A1 | 02 December 2021 |
| | | | | WO | 2021-241754 | A1 | 02 December 2021 |
| KR | 10-2023-0131648 | A | 14 September 2023 | CN | 116722140 | A | 08 September 2023 |
| | | | | EP | 4243119 | A1 | 13 September 2023 |
| | | | | US | 2023-0282812 | A1 | 07 September 2023 |
| KR | 10-2020-0065562 | A | 09 June 2020 | CN | 113169321 | A | 23 July 2021 |
| | | | | CN | 113169321 | B | 29 October 2024 |
| | | | | EP | 3890067 | A1 | 06 October 2021 |
| | | | | JP | 2022-510984 | A | 28 January 2022 |
| | | | | JP | 7209089 | B2 | 19 January 2023 |
| | | | | KR | 10-2179975 | B1 | 17 November 2020 |
| | | | | US | 12438144 | B2 | 07 October 2025 |
| | | | | US | 2021-0408527 | A1 | 30 December 2021 |
| | | | | WO | 2020-111446 | A1 | 04 June 2020 |
| KR | 10-2021-0110198 | A | 07 September 2021 | KR | 10-2539683 | B1 | 02 June 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240154216
- JP 2009080971 A